# EUROPEAN PATENT APPLICATION

(11) **EP 2 876 864 A1**
(43) Date of publication of application: **27.05.2015**
(21) Application number: 13822102.3
(22) Date of filing: 23.07.2013
(51) Int. Cl.: H04L 29/08

(54) **PROGRAM SOURCE DATA PROCESSING METHOD AND DEVICE**

(30) Priority: 23.07.2012 CN 201210255931
(71) Applicant: ZTE Corporation, Shenzhen, Guangdong 518057 (CN)
(72) Inventor: BAI, Yang, Shenzhen Guangdong 518057 (CN)
(74) Representative: Bongiovanni, Simone
(86) International application number: PCT/CN2013/079891
(87) International publication number: WO 2014/015791

(57) **Abstract**

A program source data processing method and device are provided. The method includes: receiving program source data to be distributed; and converting program source data into contents to be distributed corresponding to different network types through interfaces corresponding to the different network types, wherein the different network types correspond to different interfaces. By the technical solution, the technical problems that an intermediate server for providing the program in the related art only can be used for processing and distributing program data of one network type, and cannot be provide concentrated processing of the different network types can be solved, the technical effect for meeting the requirement of program contents of different network types can be achieved, and the capacity of processing program source data at a service side can be improved.

## Description

### TECHNICAL FIELD

The present invention relates to the field of communications, and in particular to a program source data processing method and device.

### BACKGROUND

With the continuous development of integration of three networks, i.e., the mobile network, the broadband network and the cable television network, it is urgently needed to implement a three-screen function. By the three-screen function, the sub-accounts of different terminals under the same parent account can share the bookmarks in Favourites, and the content subscription and unsubscription, which bring much convenience to the application of different people on different occasions.

For the display of media contents in the three-screen procedure, by the way at present, different media servers are selected for different network types to provide media contents suitable for respective media types. At present, there is no such a way for concentrated processing of the different network types through one server to provide media contents with different network types, which results in complex network architecture and tedious implementation and maintenance.

Aiming at the above-mentioned problem, no effective solution has been presented.

### SUMMARY

The embodiments of the present invention provide a program source data processing method and device to at least solve the technical problems that an intermediate server for providing the program in the related art can be used for processing and distributing program data of only one network type, and cannot provide the concentrated processing of different network types.

According to one embodiment of the present invention, provided is a program source data processing method, including: receiving program source data to be distributed; and converting, through interfaces corresponding to different network types, the program source data into contents to be distributed corresponding to the different network types, wherein the different network types correspond to different interfaces.

In the described embodiment, converting the program source data into contents to be distributed corresponding to the different network types includes: determining sub program contents and main program contents in the program source data, wherein the main program contents and the sub program contents have different data types; converting the main program contents through at least one interface corresponding to at least one data type of the main program contents; and converting the sub program contents through at least one interface corresponding to at least one data type of the sub program contents.

In the described embodiment, the different network types correspond to an interface corresponding to a same data type of the main program contents, and the different network types correspond to different interfaces corresponding to different data types of the sub program contents.

In the described embodiment, the network type includes at least one of the following: a mobile network, a broadband network and a cable television network.

In the described embodiment, the interfaces corresponding to the different network types are integrated in a content Interface Manipulation Platform (IMP).

In the described embodiment, after converting the program source data into the contents to be distributed corresponding to the different network types, the method further includes: after receiving a request from a terminal for acquiring the contents to be distributed, sending the contents to be distributed corresponding to the network type of the terminal to the terminal.

According to another embodiment of the present invention, provided is a program source data processing device, including: a receiving unit configured to receive program source data to be distributed; and a converting unit configured to convert the program source data into contents to be distributed corresponding to different network types through interfaces corresponding to the different network types, wherein the different network types correspond to different interfaces.

In the described embodiment, the converting unit includes: a determination component configured to determine sub program contents and main program contents in the program source data, wherein the main program contents and the sub program contents have different data types; a first converting component configured to convert the main program contents through at least one interface corresponding to at least one data type of the main program contents; and a second converting component configured to convert the sub program contents through at least one interface corresponding to at least one data type of the sub program contents.

In the described embodiment, the different network types correspond to an interface corresponding to the same data type of the main program contents, and the different network types correspond to different interfaces corresponding to different data types of the sub program contents.

In the described embodiment, the device further includes: a sending unit configured to, after the program source data are converted into the contents to be distributed corresponding to the different network types, send the contents to be distributed corresponding to the network type of a terminal to the terminal after receiving a request from the terminal for acquiring the contents to be distributed.

In the embodiments of the present invention, by integrating interfaces corresponding to different network types (also called different screens) together, when the program source data arrives, different interfaces are invoked to convert the program source data into program data suitable for different network types, such that the technical problems that an intermediate server for providing the program in the related art only can be used for processing and distributing program data of one network type, and cannot be provide concentrated processing of the different network types can be solved, the technical effect for meeting the requirement of program contents of different network types can be achieved, and the capacity of processing program source data at a service side can be improved.

### DESCRIPTION OF THE DRAWINGS

Drawings, provided for further understanding of the present invention and forming a part of the specification, are used to explain the present invention together with embodiments of the present invention rather than to limit the present invention. In the drawings:
Fig. 1 shows an example flowchart of a program source data processing method according to an embodiment of the present invention;
Fig. 2 shows another example flowchart of a program source data processing method according to an embodiment of the present invention;
Fig. 3 shows an example structure diagram of a program source data processing device according to an embodiment of the present invention;
Fig. 4 shows another example structure diagram of a program source data processing device according to an embodiment of the present invention;
Fig. 5 shows another example structure diagram of a program source data processing device according to an embodiment of the present invention;
Fig. 6 shows a schematic diagram of system networking architecture for three-screen synchronous processing according to an embodiment of the present invention;
Fig. 7 shows a flowchart of three-screen synchronous processing according to an embodiment of the present invention; and
Fig. 8 shows an interactive flowchart of three-screen synchronous processing according to an embodiment of the present invention.

### DETAILED DESCRIPTION OF THE EMBODIMENTS

The present invention is described below in detail by reference to the accompanying drawings in conjunction with embodiments. It should be noted that the embodiments and the characteristics of the embodiments can be combined with each other if no conflict is caused.

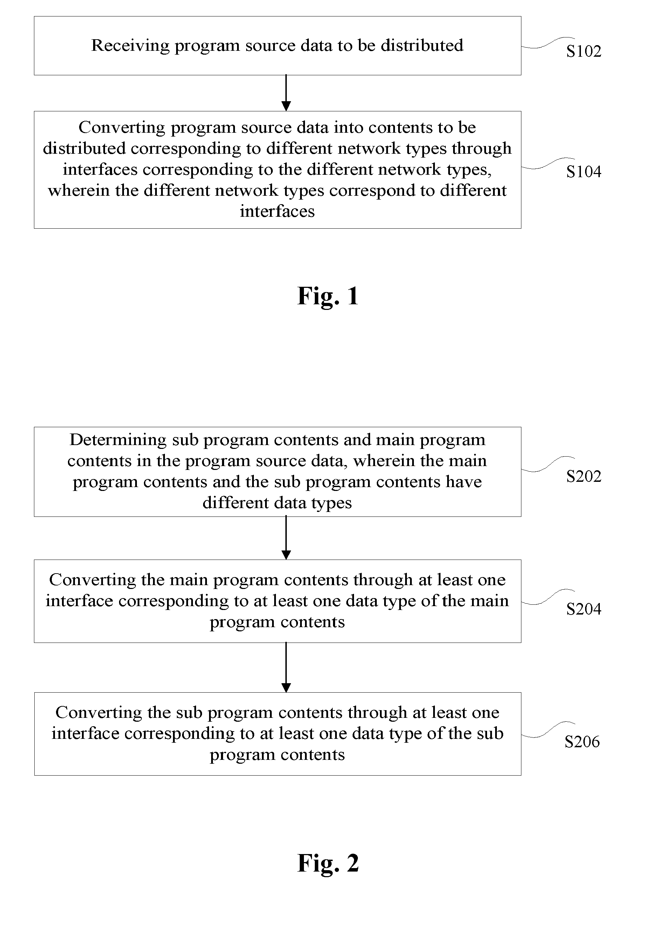

An embodiment of the present invention provides a program source data processing method, as shown in Fig. 1, including the following steps:
step S102: receiving program source data to be distributed; and
step S104: converting the program source data into contents to be distributed corresponding to different network types through interfaces corresponding to the different network types, wherein the different network types correspond to different interfaces.

In the above-mentioned example embodiment, by integrating interfaces corresponding to different network types (also called different screens) together, when program source data arrives, different interfaces are invoked to convert the program source data into program data suitable for different network types, such that the technical problems that an intermediate server for providing the program in the related art only can be used for processing and distributing program data of one network type, and cannot be provide concentrated processing of the different network types can be solved, the technical effect for meeting the requirement of program contents of different network types can be achieved, and the capacity of processing program source data at a service side can be improved.

Considering that a complete data program includes main program contents and sub program contents, for example, for contents of a movie, the text description for the movie introduction may be considered as the main program contents, and the played video contents may be considered as the sub program contents. Since the main program contents and the sub program contents correspond to different data types, interfaces with different types are provided for them respectively. In an example embodiment, converting the program source data into the contents to be distributed corresponding to the different network types, as shown in Fig. 2, includes the following steps:
step S202: determining sub program contents and main program contents in the program source data, wherein the main program contents and the sub program contents have different data types;
step S204: converting the main program contents through at least one interface corresponding to at least one data type of the main program contents; and
step S206: converting the sub program contents through at least one interface corresponding to at least one data type of the sub program contents.

The above-mentioned main program contents are generally description information of the text part, and a same data coding method can be employed for different network types. However, the sub program contents are generally video or audio data, and different data coding methods are used for different network types. Therefore, when converting the program source data into specific program contents, a program may correspond to one piece of the main program contents and a plurality of pieces of the sub program contents to meet requirements of different network types. In an example embodiment, different network types correspond to an interface corresponding to a same data type of the main program contents, and different network types correspond to different interfaces corresponding to different data types of the sub program contents.

In the described embodiment, the above-mentioned network type may include, but not limited to, at least one of the following: a mobile network, a broadband network and a cable television network.

The above-mentioned interfaces corresponding to different network types may be integrated through IPTV/three-screen content interface machine (e.g., Interface Manipulation Platform (IMP)), i.e., the interfaces corresponding to the different network types are integrated in a content Interface Manipulation Platform (IMP).

The program source data converted into program contents are stored in the background. After receiving a playing or acquisition request from a terminal, the contents corresponding to the network type of the terminal may be directly sent to the terminal, so as to meet the requirements of different network types. In an example embodiment, after the program source data are converted into contents to be distributed corresponding to different network types, the method also includes: sending the contents to be distributed corresponding to the network type of the terminal to the terminal after receiving a request from a terminal for acquiring contents to be distributed.

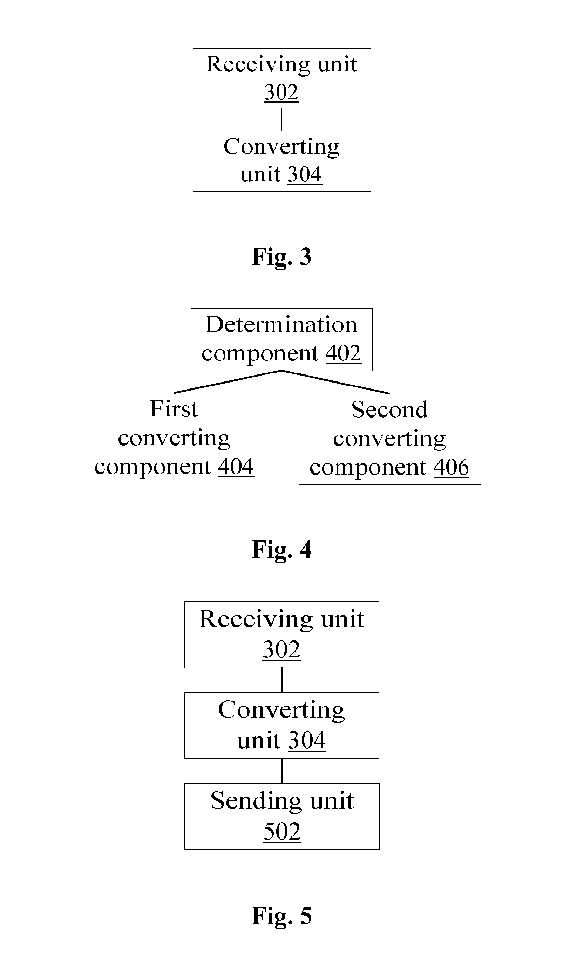

In this embodiment, also provided is a program source data processing device for implementing the above-mentioned embodiments and example embodiments, which has been described and will not be explained here. As used below, the term "unit" or "component" is a combination of software and/or hardware capable of implementing predetermined functions. Although the device described in the following embodiment may be preferably implemented by software, it would be conceived to implement hardware or a combination of software and hardware. Fig. 3 shows an example structure diagram of a program source data processing device according to an embodiment of the present invention, as shown in Fig. 3, the device includes: a receiving unit 302 and a converting unit 304. The specific structure of the device is described below.

The receiving unit **302** is configured to receive program source data to be distributed; and
the converting unit **304** is coupled to the receiving unit **302**, and configured to convert program source data into contents to be distributed corresponding to different network types through interfaces corresponding to the different network types, wherein the different network types correspond to different interfaces.

In an example embodiment, as shown in Fig. 4, the converting unit **304** includes: a determination component **402** configured to determine sub program contents and main program contents in the program source data, wherein the main program contents and the sub program contents have different data types; a first converting component **404** coupled to the determination component **402** and configured to convert the main program contents through the interface corresponding to the data type of the main program contents; and a second converting component **406** coupled to the determination component **402** and configured to convert the sub program contents through at least one interface corresponding to at least one data type of the sub program contents.

In the described embodiment, different network types correspond to an interface corresponding to a same data type of the main program contents, and different network types correspond to different interfaces corresponding to different data types of the sub program contents.

In an example embodiment, as shown in Fig. 5, the above-mentioned device also includes: a sending unit **502** configured to, after the program source data are converted into the contents to be distributed corresponding to different network types, send the contents to be distributed corresponding to the network type of the terminal to the terminal after receiving a request from a terminal for acquiring contents to be distributed.

In the embodiments of the present invention, also provided is a particular embodiment for further description of the present invention.

In the embodiment of the present invention, the three-screen integration of a mobile network, a broadband network and a cable television network is taken as an example. After receiving a message of content synchronization request sent from a Content Management System (CMS), a content interface machine parses the content synchronization request message, and converts the program source data into data corresponding to the three-screen architectures according to different source data types, which process is described as follows in detail.

When the source data type is main contents (e.g., title), the content interface machine invokes a new interface for the main contents and main program provided by SLCS to convert the main contents into three-screen information. Compared with the single IPTV screen in the related art, the content interface machine has a function of invoking the new interface for program provided by SLCS.

When the source data type is sub contents (e.g., movie), the content interface machine invokes a new interface for the sub contents and sub program provided by SLCS to convert the sub contents into three-screen information. Compared with the single IPTV screen in the related art, the content interface machine has a function of invoking the new interface for contents provided by SLCS.

For the three-screen case, the sub contents may have three types. For the movie of different screens, the content interface machine invokes the new interface for sub contents and sub program for a plurality of times, to implement the associated logical relationship among multiple pieces of sub contents under the main contents. The conversion from a single IPTV screen to three screens is implemented by the above-mentioned content interface machine invoking different sub interfaces provided by SLCS.

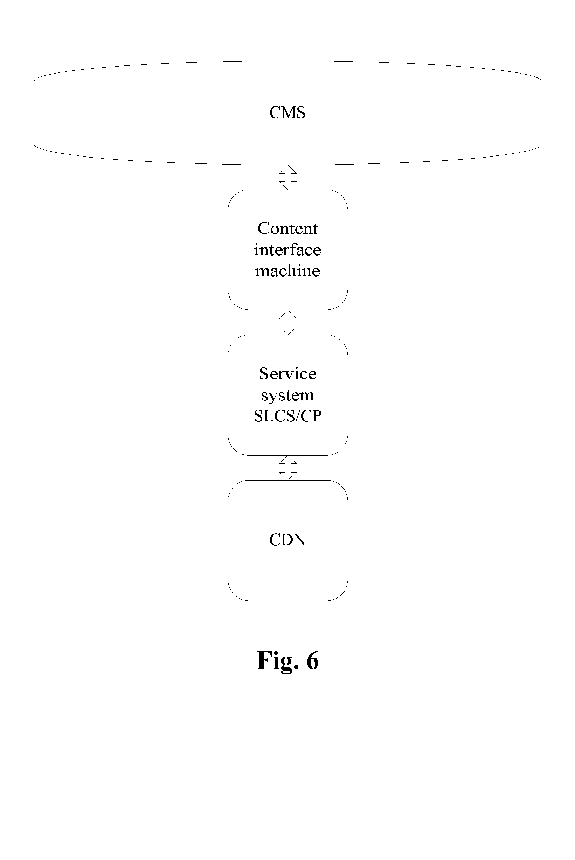

The embodiment of the present invention provides the system networking architecture diagram for three-screen synchronous processing. As shown in Fig. 6, the networking architecture includes: a Content Management System (CMS), an IPTV/three-screen content Interface Manipulation Platform (IMP), a Service Logical Control Server (SLCS), a service side content distribution component (e.g., Control Point (CP)), a Media Distribution Platform (MDP), and a Unify Streaming Server (USS). The function units are described in detail as follows.

IMP is configured to dock with a third-party platform and managing a plurality of interfaces for synchronizing contents;

SLCS is configured to call database language and operate service tables to implement converting of the program source data into program contents corresponding to different network types;

CP is configured to notify the CDN to release program contents;

MDP is configured to distribute and schedule media contents (i.e., program contents);

USS is deployed in a network to take charge of the local access of users, and also provide services such as on demand service and live broadcast service of streaming media contents.

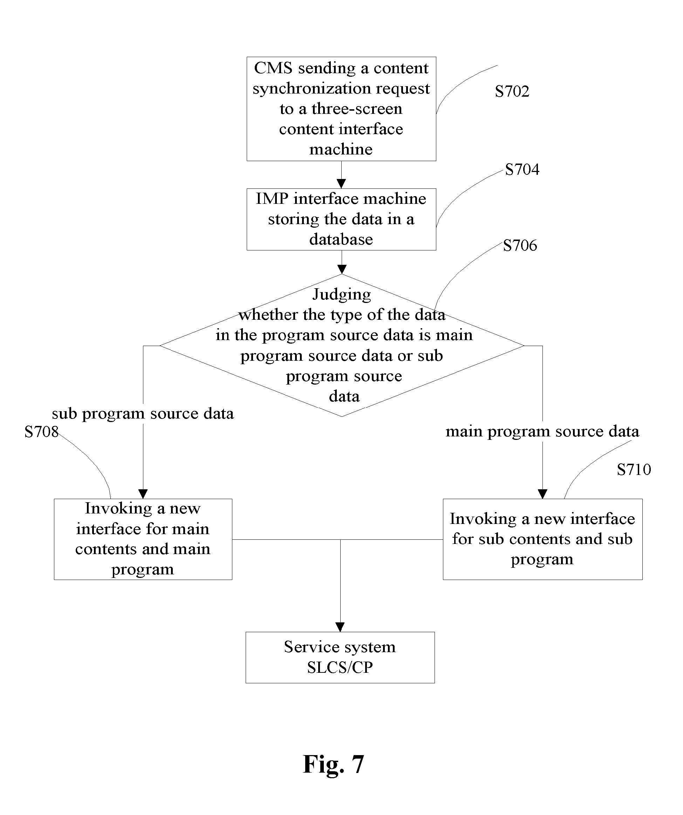

Based on the above-mentioned system networking architecture diagram, an embodiment of the present invention also provides a flowchart of three-screen content synchronous processing. As shown in Fig. 7, the processing includes the following steps:
step S702: the CMS sending a content synchronization request to a three-screen content interface machine;
step S704: the three-screen content interface machine storing the received program source data in a database;
step S706: judging whether the type of the data in the program source data is a program (also called main program source data) or a movie (also called sub program source data);
step S708: invoking a new interface for main contents and main program for the main program source data; and
step S710: invoking a new interface for sub contents and sub program for the sub program source data.

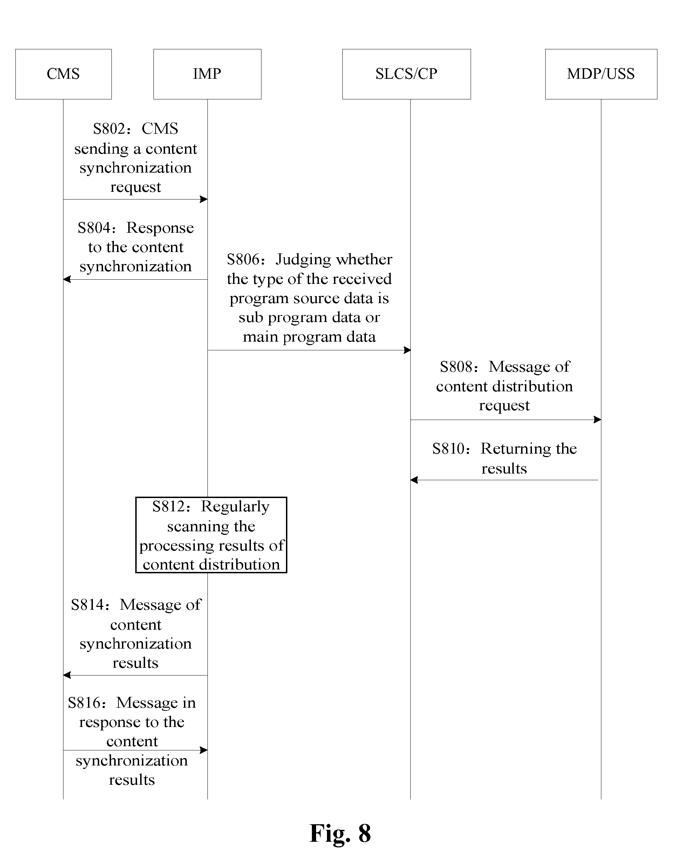

The specific operating process is shown in Fig. 8, including the following steps:
step S802: the CMS sending a content synchronization request to the IMP;
step S804: the IMP returning a response to the CMS content synchronization, the response used for confirming that the CMS receives the message;
step S806: regularly judging whether the type of the received program source data is sub program data or main program data, and for the three-screen content interface machine, selecting different new interfaces for sending SLCS;
step S808: the CP delivering a message of content distribution request to the MDP/USS;
step S810: after processing, the MDP/USS returning the results to the SLCS/CP;
step S812: the IMP regularly scanning the processing results of content distribution;
step S814: the IMP sending a message of content synchronization results to the CMS; and
step S816: the CMS sending a message in response to the content synchronization results to the IMP for confirming receipt of the result message.

It can be seen that, by the method described in the above-mentioned implementation of the embodiments of the present invention, in the content synchronization process, a series of interfaces provided by the SLCS component are recombined and invoked to convert external information into three-screen information, so as to implement unified distribution of contents of different screens, to facilitate the subsequent service development and expansion. It is noted that the implementation provided by the embodiments of the present invention has almost no requirement on the external standards, and the inventive ideas of the present invention may be applied to all standards requiring the implementation of three-screen or multi-screen, for example, the embodiments of the present invention are applicable to the field of services, such as IPTV and Web PC.

In another embodiment, also provided is software for executing the technical solution described in the above-mentioned embodiments and example embodiments.

In another embodiment, also provided is a storage medium storing the above-mentioned software, the storage medium including but not limited to: optical disk, floppy disk, hard disk, erasable memory, etc.

It can be seen from the above description that the embodiments of the present invention can achieve the following technical effects: by integrating interfaces corresponding to different network types (also called different screens) together, when program source data arrives, different interfaces are invoked to convert the program source data into program data suitable for different network types, such that the technical problems that an intermediate server for providing the program in the related art only can be used for processing and distributing program data of one network type, and cannot be provide concentrated processing of the different network types can be solved, the technical effect for meeting the requirement of program contents of different network types can be achieved, and the capacity of processing program source data at a service side can be improved.

Obviously, a person skilled in the art would understand that the above components and steps of the present invention can be realized by using general purpose calculating device, can be integrated in one calculating device or distributed on a network which consists of a plurality of calculating devices, and alternatively they can be realized by using the executable program code of the calculating device, so that consequently they can be stored in the storing device and executed by the calculating device, in some cases, can perform the shown or described step in sequence other than herein, or they are made into integrated circuit component respectively, or a plurality of components or steps thereof are made into one integrated circuit component. Thus, the present invention is not limited to any particular combination of hardware and software.

The above description is only example embodiments of the present invention and is not intended to limit the present invention, and the present invention can have a variety of changes and modifications for ordinary person skilled in the field. Any modification, equivalent replacement, or improvement made without departing from the principle of the present invention should fall within the protection scope as defined by the appended claims of the present invention.

## Claims

1. A program source data processing method, **characterized by** comprising:
receiving program source data to be distributed; and
converting, through interfaces corresponding to different network types, the program source data into contents to be distributed corresponding to the different network types, wherein the different network types correspond to different interfaces.

2. The method according to claim 1, **characterized in that** converting the program source data into contents to be distributed corresponding to the different network types comprises:
determining sub program contents and main program contents in the program source data, wherein the main program contents and the sub program contents have different data types;
converting the main program contents through at least one interface corresponding to at least one data type of the main program contents; and
converting the sub program contents through at least one interface corresponding to at least one data type of the sub program contents.

3. The method according to claim 2, **characterized in that** the different network types correspond to an interface corresponding to a same data type of the main program contents, and the different network types correspond to different interfaces corresponding to different data types of the sub program contents.

4. The method according to claim 1, **characterized in that** the network type comprises at least one of the following: a mobile network, a broadband network and a cable television network.

5. The method according to claim 1, **characterized in that** the interfaces corresponding to the different network types are integrated in a content Interface Manipulation Platform (IMP).

6. The method according to any one of claims 1 to 5, **characterized in that** after converting the program source data into the contents to be distributed corresponding to the different network types, the method further comprises:
after receiving a request from a terminal for acquiring the contents to be distributed, sending the contents to be distributed corresponding to the network type of the terminal to the terminal.

7. A program source data processing device, **characterized by** comprising:
a receiving unit configured to receive program source data to be distributed; and
a converting unit configured to convert the program source data into contents to be distributed corresponding to different network types through interfaces corresponding to the different network types, wherein the different network types correspond to different interfaces.

8. The device according claim 7, **characterized in that** the converting unit comprises:
a determination component configured to determine sub program contents and main program contents in the program source data, wherein the main program contents and the sub program contents have different data types;
a first converting component configured to convert the main program contents through at least one interface corresponding to at least one data type of the main program contents; and
a second converting component configured to convert the sub program contents through at least one interface corresponding to at least one data type of the sub program contents.

9. The device according to claim 8, **characterized in that** the different network types correspond to an interface corresponding to the same data type of the main program contents, and the different network types correspond to different interfaces corresponding to different data types of the sub program contents.

10. The device according to any one of claims 7 to 9, **characterized in that** the device further comprises:
a sending unit configured to, after the program source data are converted into the contents to be distributed corresponding to the different network types, send the contents to be distributed corresponding to the network type of a terminal to the terminal after receiving a request from the terminal for acquiring the contents to be distributed.
